# EUROPÄISCHE PATENTSCHRIFT

(11) **EP 1 429 904 B1**
(45) Veröffentlichungstag und Bekanntmachung des Hinweises auf die Patenterteilung: **29.08.2007**
(21) Anmeldenummer: 02751025.4
(22) Anmeldetag: 13.06.2002
(51) Int. Cl.: B29C 45/60

(54) **VERFAHREN ZUR VERARBEITUNG VON KUNSTSTOFFPARTIKELN UND PLASTIFIZIERSCHNECKE FÜR EIN SOLCHES VERFAHREN**
METHOD FOR PROCESSING PLASTIC PARTICLES AND A PLASTICIZING SCREW FOR A METHOD OF THIS TYPE
PROCEDE POUR TRANSFORMER DES PARTICULES DE MATIERE PLASTIQUE ET VIS DE PLASTIFICATION ASSOCIEE

(30) Priorität: 24.09.2001 DE 10146851
(43) Veröffentlichungstag der Anmeldung: 23.06.2004
(73) Patentinhaber: Schäfer, Manfred, 35641 Schöffengrund (DE); Jährling, Volker, 64342 Seeheim Jugenheim (DE)
(72) Erfinder: SCHÄFER, Manfred, 35641 Schöffengrund (DE)
(74) Vertreter: Meissner, Bolte & Partner
(86) Internationale Anmeldenummer: PCT/EP2002/006494
(87) Internationale Veröffentlichungsnummer: WO 2003/028975

(56) Entgegenhaltungen:
- EP-A- 0 025 825
- EP-A- 0 623 446
- WO-A-01/68345
- FR-A- 2 132 898
- US-A- 3 599 292
- US-B1- 6 234 659
- PATENT ABSTRACTS OF JAPAN vol. 2002, no. 9, 4. September 2002 (2002-09-04) & JP 2002 131874 A (FUJI PHOTO FILM CO LTD), 9. Mai 2002 (2002-05-09)
- U. LOSKE: "Praxisgerechte Anwendung von Entgasungsausrüstungen für Spritzgiessmaschinen" KUNSTSTOFFE., Bd. 86, Nr. 6, Juni 1978 (1978-06), Seiten 335-339, XP002217993 CARL HANSER VERLAG. MUNCHEN., DE ISSN: 0023-5563
- W. BACKHOFF: "Entgasungseinheit für Spritzgiessmaschinen mit normaler Baulänge" KUNSTSTOFFE., Bd. 67, Nr. 6, Juni 1977 (1977-06), Seiten 307-311, XP002217994 CARL HANSER VERLAG. MUNCHEN., DE ISSN: 0023-5563

## Beschreibung

Die Erfindung betrifft ein Verfahren zur Verarbeitung von Kunststoffpartikeln, insbesondere aus geschredderten Kunststoffabfällen, zu einer spritzfähigen Formmasse sowie zu deren Förderung in eine Spritzgießmaschine, mit einer Plastifizierschnecke mit einer in einem Plastifizierzylinder angeordneten, an einem wellenförmigen Schneckenkern befindlichen Schneckenwendel, wobei die in ihrer Längsrichtung aus einer Mehrzahl von aufeinanderfolgenden Arbeitszonen bestehende Plastifizierschnecke mindestens einen Eingangs- und Kompressionsbereich zum Einzug der Kunststoffpartikel aus einem Einfülltrichter und zu deren technologischer Verarbeitung zu einer homogenen Formmasse sowie einen Transportbereich zur Förderung der spritzfähigen, homogenen Formmasse in eine in die Spritzgießmaschine mündende Austrittsöffnung aufweist. Die Erfindung betrifft ferner eine Plastifizierschnecke zum Spritzgießen mit einer in einem Plastifizierzylinder angeordneten, an einem wellenförmigen Schneckenkern befindlichen Schneckenwendel, wobei der Schneckenkern entlang der Gesamtlänge der Plastifizierschnecke mehrere Bereiche mit jeweils mehreren Arbeitszonen aufweist, nämlich einen Eingangs-und Kompressionsbereich zum Einzug von Kunststoffpartikeln aus einem Einfülltrichter und zu deren technologischer Verarbeitung zu einer homogenen Formmasse und einen Transportbereich zur Förderung der spritzfähigen, homogenen Formmasse in eine in eine Spritzgießmaschine mündende Austrittsöffnung, vgl. z.B. die US-A-6234659.

Ein Verfahren dieser Art einschließlich der zugehörigen Plastifizierschnecke ist in der Patentschrift DE 42 38 277 C2 ausführlich beschrieben. Eine solche Plastifizierschnecke wandelt unter Einwirkung von Druck und Temperatur die Kunststoffpartikel in einer Folge von Arbeitszonen in eine spritzfähige Formmasse um, die in eine Spritzgießmaschine eingeführt und dort unmittelbar verarbeitet werden kann. Während die für dieses Verfahren erforderliche Prozesswärme teilweise zugeführt werden muss, werden die Druckverhältnisse innerhalb der Plastifizierschnecke vor allem von der Ausgestaltung der Schneckengeometrie bestimmt, insbesondere durch Vergrößerung und/oder Verkleinerung des freien, dem Kunststoff verfügbaren Volumens innerhalb des Plastifizierzylinders. Dazu kann beispielsweise der Durchmesser des Schneckenkerns in Förderrichtung variiert werden. Auf diese Weise ist es gelungen, die in einem Einfülltrichter einfallenden Kunststoffpartikel in einem rein mechanischen Arbeitsgang in eine spritzfähige Formmasse umzuwandeln, gleichgültig, ob es sich dabei um geschredderte Kunststoffabfälle oder Neuwerkstoffe handelte.

Kunststoffabfälle tragen in dieses Verfahren unerwünschte Anteile ein. So enthalten hygroskopische Kunststoffe Wasser, das in einem vorhergehenden, zeit- und kostenaufwendigen Trockenvorgang aus den Kunststoffpartikeln entfernt werden muss; verbleibende Restfeuchte ist hierbei nicht auszuschließen. Andere unerwünschte Beimengungen werden dabei zumeist nicht mit ausgeschieden; hierzu gehören vor allem in den Kunststoffen verbliebene Bestandteile von Lacken und Lösungsmitteln und restierende Monomere, die allesamt die Qualität der Fertigerzeugnisse mindern und beispielsweise deren Oberflächengüte beeinträchtigen und/oder zu schadhaften Ablagerungen an den verwendeten, teilweise sehr teuren Spritzgießformen führen und deren Lebensdauer verkürzen.

Die Erfindung hat sich die Aufgabe gestellt, diese Mängel zu beseitigen und dabei die aus den Kunststoffpartikeln hergestellte Formmasse von allen unerwünschten Beimengungen in einem kontinuierlichen Prozess zu befreien, bevor diese in den Spritzvorgang gelangen.

Erfindungsgemäß wird die Aufgabe zunächst durch ein Verfahren gemäß Anspruch 1 gelöst, bei dem zwischen dem Eingangs- und Kompressionsbereich und dem Transportbereich ein Reinigungsbereich vorgesehen ist, in dem die bereits zumindest teilweise homogenisierte Formmasse durch Entgasung gereinigt und dabei störende Anteile der Formmasse gasförmig ausgeschieden werden, wobei insbesondere Wasser, Lacke, Lösungsmittel und Monomere oder dergleichen Anteile aus der_Formmasse als Gase ausgeschieden werden können. Die Einschaltung einer Entgasungsstufe direkt in dem innerhalb der Plastifizierschnecke ablaufenden Umwandlungsprozess stellt sicher, dass dieser bei gleichzeitiger Reinigung der Formmasse weiterhin kontinuierlich abgewickelt werden kann und die störenden Beimengungen in den Kunststoffpartikeln bzw. in der spritzförmigen Formmasse nicht vorher oder nachher in einem diskontinuierlichen Arbeitsgang entfernt werden müssen oder deren qualitätsmindernden Wirkungen in Kauf zu nehmen wären.

Dabei ist es am besten, wenn in dem Reinigungsbereich die durch Entgasung der Formmasse aus dieser herausgelösten Anteile aus dem Plastifizierzylinder abgeführt werden, bevor die Formmasse in den Transportbereich gefördert wird; dazu ist es besonders vorteilhaft, wenn der Druck in dem Reinigungsbereich der Plastifizierschnecke soweit abgesenkt wird, dass mit den Gasen keine weiteren, pastösen Bestandteile der Formmasse aus dem Plastifizierzylinder ausgetragen werden. Auf diese Weise gestaltet sich die Abführung der entgasten Bestandteile besonders einfach, die beispielsweise unmittelbar einer Absaugung zugeführt werden können, ohne dass Teile der Formmasse mitgerissen werden.

Ein Aspekt des erfindungsgemäßen Verfahrens besteht weiterhin darin, dass jedem der in den Arbeitszonen ablaufenden aufeinanderfolgenden, detaillierten Verfahrensschritte jeweils ein charakteristischer Temperaturverlauf oder eine bestimmte Temperatur zugeordnet wird, die unabhängig von den Temperaturverläufen während des jeweils vorangehenden und/oder nachfolgenden Verfahrensschrittes gewählt werden. Auf diese Weise kann die Temperatursteuerung dem Umwandlungsprozess innerhalb der Plastifizierschnecke und der Art der eingesetzten Kunststoffe und deren möglichen auszuscheidenden Beimengungen genau angepasst werden; sie kann als Programmsteuerung ausgeführt und von einem Rechner geführt sein, so dass dann das gesamte Verfahren relativ selbsttätig abläuft. Auf diese Weise gelingt es, unerwünschte Anteile aus der Formmasse nahezu vollständig zu entfernen, die Qualität der aus der Formmasse in der Spritzgießmaschine hergestellten Erzeugnisse wesentlich zu verbessern und die Lebensdauer der erforderlichen hochwertigen Spritzgießformen zu erhöhen, ohne Qualitätsverluste in Kauf nehmen zu müssen.

Weiterhin wird die Aufgabe der Erfindung durch eine Plastifizierschnecke gemäß Anspruch 5 gelöst, bei der in einem Reinigungsbereich zwischen dem Eingangs-und Kompressionsbereich und dem Transportbereich an dem Plastifizierzylinder ein Auslass für die zu entfernenden Gase vorgesehen ist, der bevorzugt in einfacher Weise das Innere des Plastifizierzylinders mit einem Raum geringeren Druckes verbindet, beispielsweise mit der Atmosphäre, so dass, wenn das erforderlich ist, die Gase mit wenig Aufwand abgeführt und schadlos beseitigt werden können. Eine Druckabsenkung im Einzugsbereich des Auslasses kann in einfacher Weise dadurch herbeigeführt werden, dass der Durchmesser des Schneckenkerns in dem Reinigungsbereich abgesenkt und ein Ringraum ausgebildet ist, dessen Volumen das des vorangehenden, der Formmasse zur Verfügung stehenden Raumvolumens, vorzugsweise beträchtlich, übertrifft. Es ist damit sichergestellt, dass die pastöse Formmasse gänzlich im Bereich der Ptastifizierschnecke verbleibt und auch nicht partiell von den durch den Auslass austretenden Gasen mitgerissen wird. Der zur Förderung der Formmasse aus der Austrittsöffnung der Plastifizierschnecke erforderliche Stempeldruck wird dadurch gewonnen, dass innerhalb des Transportbereiches der Durchmesser des Schneckenkerns wieder angehoben und das für die Formmasse verfügbare Raumvolumen wieder verkleinert ist. Ein Rückstau wegen des niedrigeren Druckes in dem Reinigungsbereich erfolgt wegen der dynamischen Förderung der Formmasse durch die Plastifizierschnecke nicht.

Es ist zweckmäßig, wenn der Reinigungsbereich im wesentlichen der Trennung der Formmasse von den bereits aus ihr entgasten unerwünschten Beimengungen zur Verfügung steht. Deshalb ist eine besonders vorteilhafte Ausführung der erfindungsgemäßen Plastifizierschnecke dadurch gekennzeichnet, dass innerhalb des Eingangs- und Kompressionsbereiches kurz vor dem Reinigungsbereich der Durchmesser des Schneckenkerns abgesenkt und ein Ringraum ausgebildet ist, dessen Volumen das des vorangehenden, der Formmasse zur Verfügung stehenden Raumes, vorzugsweise beträchtlich, übertrifft, so dass die Entgasung der Formmasse bereits hier zu großen Teilen oder gänzlich erfolgen kann.

Einen feinfühligen, dem jeweils eingesetzten Kunststoff angepassten Temperaturverlauf in den Arbeitszonen der Plastifizierschnecke gewinnt man, erfindungsgemäß wenn vielen oder allen Arbeitszonen jeweils eine gesonderte und von den anderen unabhängig steuerbare Heizung zugeordnet ist.

Schließlich hat es sich gezeigt, dass der mit einer Druckverminderung einhergehende Transportbereich am besten in Förderrichtung vor der Austrittsöffnung in einer Arbeitszone endet, die als auslaufende Spitze ausgebildet ist, wobei die Schneckenwendel soweit wie möglich in die Spitze hineingeführt ist.

Insgesamt stehen damit ein Verfahren und eine Vorrichtung zur Verfügung, mit deren Hilfe die oben beschriebenen Nachteile des Standes der Technik gegebenenfalls restlos beseitigt sind, gleichzeitig aber der gesamte Arbeitsprozess der Herstellung und Bereitstellung einer spritzfähigen Formmasse aus Kunststoffpartikeln sowohl aus neuen Kunststoffen als auch aus geschredderten Kunststoffabfällen kontinuierlich abläuft und eine diskontinuierliche Entgasung nicht mehr erforderlich ist.

Welche Art von Bauteilen aus dem erfindungsgemäß verarbeiteten Kunststoff hergestellt werden, ist grundsätzlich beliebig. Es sind deshalb vielfältige Einsatzmöglichkeiten denkbar. Besonders große Vorteile bietet der erfindungsgemäß verarbeitete Kunststoff jedoch bei der Beschichtung von Bauteilen durch Lackieren oder Tauchen, wie es insbesondere in der Automobilindustrie Anwendung findet. Um die Beschichtungsprozesse mit ausreichender Qualität durchführen zu können, sind vielfach Bauteile notwendig, die als Betriebsmittel bei der Positionssicherung von Karosserieteilen während der Lackierung und/oder Beschichtung im Tauchbad dienen. Beispielsweise ist es beim Lackieren einer Kfz-Karosserie notwendig, das der Kofferraumdeckel von solch einem Bauteil offengehalten wird, damit der Kofferraum auch auf der Innenseite lackiert werden kann.

Bisher werden zur Positionssicherung in der Regel entsprechend gestaltete Metallteile verwendet. Um Farbfehler zu verhindern, ist es bei diesen Metallteilen vor der Verwendung bei einem weiteren Lackiervorgang notwendig, die Metallteile sorgfältig zu reinigen und so die beim Lackieren aufgebrachte Farbspuren zu entfernen. Diese Reinigung ist jedoch zeit- und kostenaufwendig. Durch Substitution dieser Metallteile durch Kunststoffteile, die aus einem erfindungsgemäß verarbeiteten Kunststoff gefertigt sind, kann somit ein großer Kostenvorteil erreicht werden. Die Farbreste müssen nach dem Lackieren nicht mehr einzeln entfernt werden. Vielmehr werden die Kunststoffteile nach dem Lackieren zerkleinert und aus den dabei entstehenden Kunststoffpartikeln neue Kunststoffteile gefertigt. Die störenden Lack- oder Farbreste werden durch das erfindungsgemäße Verarbeitungsverfahren ohne großen Aufwand aus der Kunststoffmasse entfernt.

Um die Kunststoffqualität auch nach der Durchführung einer Vielzahl von Zyklen auf einem für den jeweiligen Anwendungsfall ausreichenden Niveau zu halten, kann den durch zerkleinern erhaltenen Kunststoffpartikeln eine entsprechend geeignete Teilmenge von Neuware bei jedem Zyklus zugemischt werden.

Anhand der Zeichnung wird nachstehend ein Ausführungsbeispiel der Erfindung näher beschrieben. Es zeigen
- Fig.1: eine Plastifizierschnecke nach der Erfindung,
- Fig.2: die gleiche Plastifizierschnecke, jedoch vereinfacht und unter Angabe ihrer Arbeitszonen,
- Fig.3: die Plastifizierschnecke entsprechend Fig.1 und 2, stark vergrößert und
- Fig.4: den Verlauf des Druckes in der Plastifizierschnecke,
sämtlich in schematischer, vereinfachter Darstellung.

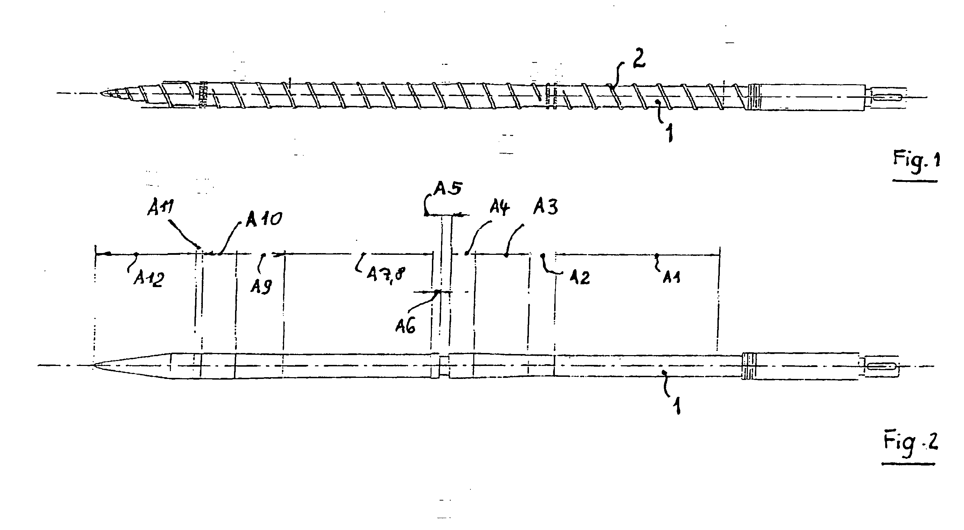

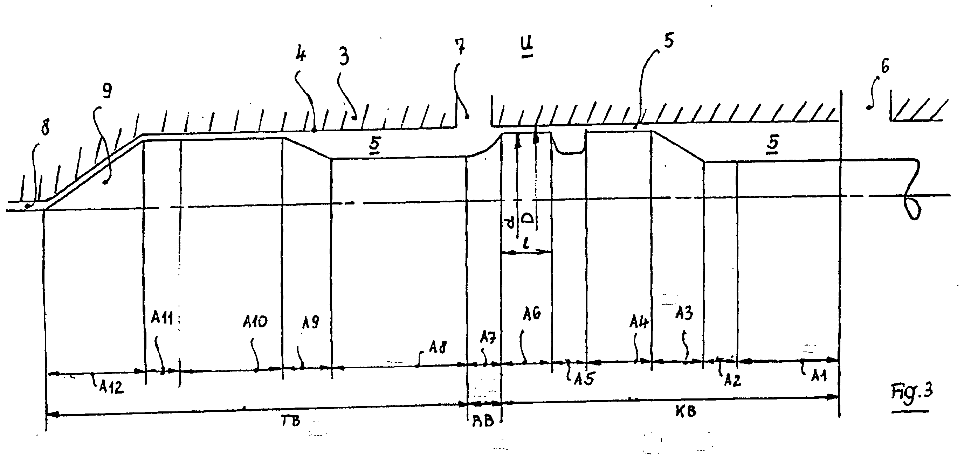

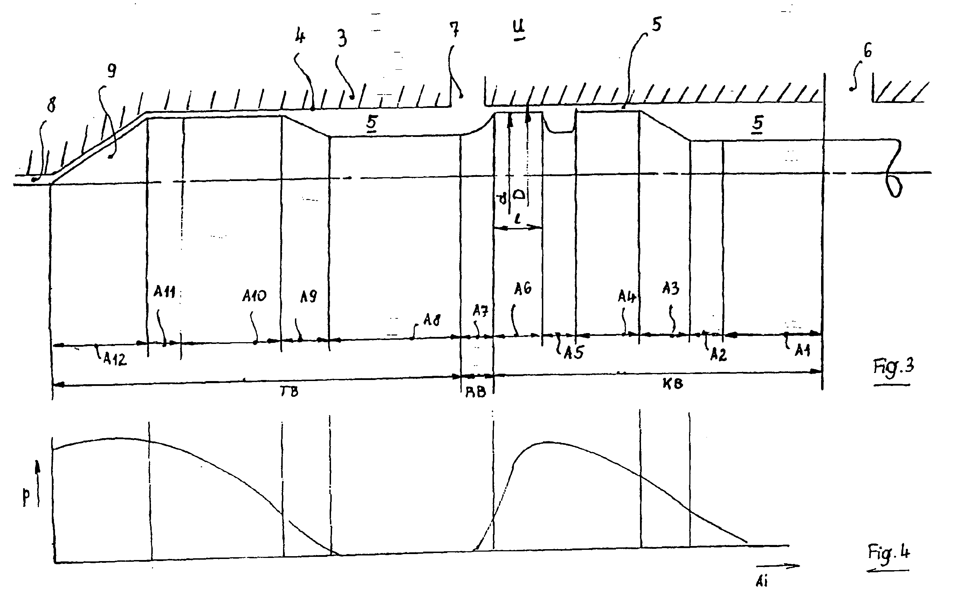

Eine Plastifizierschnecke nach der Erfindung besteht im wesentlichen entsprechend Fig.1, 2 aus einem Schneckenkern 1 mit einer (Fig.2) auf diesen aufgelegten Schneckenwendel 2 und einem in der Fig.3 angedeuteten Plastifizierzylinder 3. Zwischen dem Schneckenkern 1 und der Innenwand 4 des Plastifizierzylinders 3 verbleiben Raumvolumina 5 unterschiedlicher Abmessung, deren Größe jeweils von dem Außendurchmesser d des Schneckenkernes 1 und dem Innendurchmesser D des Plastifizierzylinders 3 abhängt sowie davon, auf welche Länge I diese Durchmesser d, D unverändert bleiben. Für eine Arbeitszone A6 der in insgesamt 12 Arbeitszonen Ai (i=1...12) eingeteilten Plastifizierschnecke sind diese Größen in der Fig.3 beispielsweise angegeben.

An dem Plastifizierzylinder 3 ist ein Einfülltrichter 6 angedeutet, der zur Beschickung der Plastifizierschnecke mit Kunststoffpartikeln vorgegebener Konfektion dient, die, insbesondere, wenn sie aus Kunststoffabfällen gewonnen worden sind, gegebenenfalls unerwünschte Beimengungen aufweisen, die nicht in eine Spritzgießmaschine gelangen dürfen. Zu diesem Zweck werden diese von den Kunststoffen aufgenommenen Anteile wie Wasser, Lacke, Lösungsmittel oder monomere Kunststoffe und dergleichen in einer als Reinigungsbereich RB bezeichneten Arbeitszone A7 aus der homogenen Formmasse ausgeschieden, in welche hier die Kunststoffpartikel schon transformiert sind, nachdem sie einen kombinierten Eingangs- und Kompressionsbereich KB aus einer Folge von Arbeitszonen A1 - A6 durchlaufen haben. Die dementsprechend in der Arbeitszone A7 anfallenden Gase werden über einen Auslass 7 aus dem Innenraum des Plastifizierzylinders 3 in den Raum U abgesaugt und entsorgt. Während in einem Einzug A1 die Kunststoffpartikel zunächst in den Arbeitsbereich der Plastifizierschnecke gelangen, werden sie nach einer ersten Mischzone A2 in einer Kompressionszone A3 hochkomprimiert und homogenisiert, bevor sie in einer von zwei sogenannten Meteringzonen A4 und A6 begrenzten Entgasungszone A5 von ihren abzuführenden, im Gegensatz zu dem hochpolymeren Kunststoff niedrigsiedenden Bestandteilen befreit werden, die wie dargelegt in dem Reinigungsbereich RB entweichen können. Einem weiteren Einzug A8 folgen schließlich in dem Transportbereich TB erneut eine Kompressionszone A9 und eine weitere Meteringzone A10, wobei in den Meteringzonen A4,A10 die jeweils vorangegangene Kompression der Formmasse zumindest teilweise rückgängig gemacht wird. Schließlich gelangt die Formmasse nach einer zweiten Mischzone A11 in den Bereich der in eine Austrittsöffnung 8 auslaufenden Spitze 9 in der Übergangszone A12, in der die spritzbereite Formmasse von gegebenenfalls mitgerissenen Lufteinschlüssen befreit, teilweise wieder komprimiert wird und eine Konsistenz erhält, die sie zum Spritzgießen besonders geeignet macht. Die Spitze 9 ist in der Regel auswechelbar, so dass sie, in unterschiedlicher Geometrie ausgeführt, dem jeweiligen Kunststoff exakt angepasst werden kann.

In der Fig. 4 ist der Druck p in der Formmasse über der Gesamtheit der Arbeitszonen Ai aufgetragen; Änderungen des Druckes p hängen allein von der Geometrie der Plastifizierschnecke - Durchmessser d des Schneckenkerns 1, Steigung und Höhe der Schneckenwendel 2, Längen I der Arbeitszonen Ai, Innendurchmesser D des Plastifizierzylinders 3 usw. - ab wie aber auch von den jeweils herrschenden Temperaturen, die mittels den jeweiligen Arbeitszonen Ai einzeln zugeordneten Heizfeldern steuerbar sind; die Einzelheiten einer solchen Anordnung wie auch die beispielsweise programmabhängige und gegebenenfalls rechnerorientierte Temperatursteuerung dieser Heizfelder sind fachgemäß und in der Zeichnung daher weggelassen. In der Fig. 4 ist deutlich zu erkennen, dass der Druck in den Arbeitszonen A7, A8 deutlich abgesenkt ist, so dass tatsächlich die gesamte Formmasse innerhalb der Plastifizierschnecke verbleibt, trotz des in diesem Bereich befindlichen Auslasses 7.

### Bezugszeichenliste

- 1: Schneckenkern
- 2: Schneckenwendel
- 3: Plastifizierzylinder
- 4: Innenwand
- 5: Raumvolumen
- 6: Einfülltrichter
- 7: Auslass
- 8: Austrittsöffnung
- 9: Spitze

- d: Außendurchmesser, Durchmesser
- D: Innendurchmesser, Durchmesser
- l: Länge (einer Arbeitszone)

- Ai=A1-A12: Arbeitszonen
- A1: Einzug
- A2: (erste) Mischzone
- A3: Kompressionszone
- A4: Meteringzone
- A5: Entgasungszone
- A6: Meteringzone
- A7: Reinigungszone
- A8: Einzug
- A9: Kompressionszone
- A10: Meteringzone
- A11: (zweite) Mischzone
- A12: Übergangszone
- KB: Eingangs- und Kompressionsbereich (A1-A6)
- RB: Reinigungsbereich (A7)
- TB: Transportbereich (A8-A12)

## Patentansprüche

1. Verfahren zur Verarbeitung von Kunststoffpartikeln, die durch Zerkleinern von lackierten Bauteilen hergestellt sind und flüchtige Lack- oder Farbreste enthalten, zu einer spritzfähigen Formmasse sowie zu deren Förderung in eine Spritzgießmaschine, mit einer Plastifizierschnecke mit einer in einem Plastifizierzylinder (3) angeordneten, an einem wellenförmigen Schneckenkern (1) befindlichen Schneckenwendel (2), wobei die in ihrer Längsrichtung aus einer Mehrzahl von aufeinanderfolgenden Arbeitszonen (Ai;i=1...12) bestehenden Plastifizierschnecke mindestens einen Eingangs- und Kompressionsbereich (KB) zum Einzug der Kunststoffpartikel aus einem Einfülltrichter (6) und zu deren technologischer Verarbeitung zu einer homogenen Formmasse sowie einen Transportbereich (TB) zur Förderung der spritzfähigen, homogenen Formmasse in eine in die Spritzgießmaschine mündende Austrittsöffnung (8) aufweist, wobei zwischen dem Eingangs- und Kompressionsbereich (KB) und dem Transportbereich (TB) ein Reinigungsbereich (RB) vorgesehen ist, in dem die bereits zumindest teilweise homogenisierte Formmasse durch Entgasung gereinigt und dabei die flüchtigen Lack- oder Farbreste aus der Formmasse als Gase ausgeschieden werden, wobei jedem der in den Arbeitszonen (Ai) abgelaufenen aufeinanderfolgenden, detaillierten Verfahrensschritte jeweils ein charakteristischer Temperaturverlauf oder eine bestimmte Temperatur zugeordnet wird, die unabhängig von den Temperaturverläufen während des jeweils vorangehenden und/oder nachfolgenden Verfahrensschrittes gewählt werden.

2. Verfahren nach Anspruch 1,
**dadurch gekennzeichnet, dass**
aus der Formmasse Wasser, Lösungsmittel und Monomere oder dergleichen Anteile gasförmig ausgeschieden werden.

3. Verfahren nach Anspruch 1 oder 2,
**dadurch gekennzeichnet, dass**
in dem Reinigungsbereich (RB) die durch Entgasung der Frommasse aus dieser herausgelösten Anteile aus dem Plastifizierzylinder (3) abgeführt werden, bevor die Formmasse in den Transportbereich (TB) gefördert wird.

4. Verfahren nach einem der Ansprüche 1 bis 3,
**dadurch gekennzeichnet, dass**
der Druck in dem Reinigungsbereich (RB) der Plastifizierschnecke soweit abgesenkt wird, dass mit den Gasen keine weiteren, pastösen Bestandteile der Formmasse aus dem Plastifizierzylinder (3) ausgetragen werden.

5. Plastifizierschnecke zum Spritzgießen mit einer in einem Plastifizierzylinder (3) angeordneten, an einem wellenförmigen Schneckenkern (1) befindlichen Schneckenwendel (2), wobei der Schneckenkern (1) entlang der Gesamtlänge der Plastifizierschnecke mehrere Bereiche mit jeweils mehreren Arbeitszonen (Ai) aufweist, nämlich einen Eingangs- und Kompressionsbereich (KB) zum Einzug von Kunststoffpartikeln, die durch Zerkleinern von lackierten Bauteilen hergestellt sind und flüchtige Lack- oder Farbreste enthalten, aus einem Einfülltrichter (6) und zu deren technologischer Verarbeitung zu einer homogenen Formmasse, und einen Transportbereich (TB) zur Förderung der spritzfähigen, homogenen Formmasse in eine in eine Spritzgießmaschine mündende Austrittsöffnung (8), wobei in einem Reinigungsbereich (RB) zwischen dem Eingags- und Kompressionsbereich (KB) und dem Transportbereich (TB) an dem Plastifizierzylinder (3) ein Auslass (7) vorgesehen ist, durch den die flüchtigen Lack- oder Farbreste aus der Formmasse als Gase ausgeschieden werden können, und wobei vielen oder allen Arbeitszonen (Ai) jeweils eine gesonderte und von den anderen Arbeitszonen (Ai) unabhängig steuerbare Heizung zugeordnet ist.

6. Plastifizierschnecke nach Anspruch 5,
**dadurch gekennzeichnet, dass**
der Auslass (7) das Innere des Plastifizierzylinders (3) mit einem Raum (U) geringeren Druckes verbindet, beispielsweise mit der Atmosphäre.

7. Plastifizierschnecke nach Anspruch 5 oder 6,
**dadurch gekennzeichnet, dass**
der Durchmesser (d) des Schneckenkerns (1) in dem Reinigungsbereich (RB) abgesenkt und ein Ringraum ausgebildet ist, dessen Volumen das des vorangehenden, der Frommasse zur Verfügung stehenden Raumvolumens (5) übertrifft.

8. Plastifizierschnecke nach einem der Ansprüche 5 bis 7,
**dadurch gekennzeichnet, dass**
innerhalb des Transportbereiches (TB) der Durchmesser (d) des Schneckenkerns (1) wieder angehoben und das für die Formmasse verfügbare Raumvolumen wieder verkleinert ist.

9. Plastifizierschnecke nach einem der Ansprüche 5 bis 8,
**dadurch gekennzeichnet, dass**
innerhalb des Eingans- und Kompressionsbereiches (KB) kurz vor dem Reinigungsbereich (RB) der Durchmesser (d) des Schneckenkerns (1) abgesenkt und ein Ringraum ausgebildet ist, dessen Volumen das des vorangehenden, der Formmasse zur Verfügung stehenden Raumes übertrifft.

10. Plastifizierschnecke nach einem der Ansprüche 5 bis 9,
**dadurch gekennzeichnet, dass**
sie in Förderrichtung vor der Austrittsöffnung (8) in einer Arbeitszone (Ai) endet, die als auslaufende Spitze (9) ausgebildet ist, wobei die Schneckenwedel (2) soweit wie möglich in die Spitze (9) hineingeführt ist.

11. Verfahren nach einem der Ansprüche 1 bis 4,
**dadurch gekennzeichnet, dass**
aus der Formmasse ein Bauteil zur Verwendung als Betriebsmittel bei der Positionssicherung von Karosserieteilen während der Lackierung und/oder Beschichtung im Tauchbad hergestellt wird.

12. Verfahren nach Anspruch 11,
**dadurch gekennzeichnet,dass**
das Bauteil nach der Beschichtung wieder zu Kunststoffpartikeln zerkleinert wird, aus denen danach erneut Bauteile zur Verwendung als Betriebsmittel bei der Positionssicherung von Karosserieteilen während der Lackierung und/oder Beschichtung im Tauchbad hergestellt werden.

13. Verfahren nach Anspruch 12,
**dadurch gekennzeichnet, dass**
den Kunststoffpartikeln noch unverarbeitete Kunststoffpartikel beigemengt werden.

## Claims

1. A method for processing plastic particles produced by reducing the size of painted components and containing volatile paint or color remnants into a molded mass which can be injection molded and for their transport into an injection-molding machine, with a plasticizing screw having a helix (2) disposed on a wave-shaped screw core (1) arranged in a plasticizing cylinder (3), wherein the plasticizing screw having a plurality of longitudinally-disposed sequential working zones (Ai; i=I... 12) comprises at least one inlet and compression region (KB) for drawing in the plastic particles from a filling hopper (6) and for their technical processing into a homogeneous molded mass, as well as a transport region (TB) for conveying the homogeneous molded mass which can be injection molded into an outlet opening (8) leading into the injection molding machine, wherein a purification zone (RB) is provided between the inlet and compression region (KB) and the transport region (TB) in which the molded mass which has already been at least partially homogenized is purified by degasification and the volatile paint or color remnants are thus eliminated as gas, wherein a respective characteristic temperature gradient or a specific temperature is assigned to each respective detailed process step executed successively in the working zones (Ai), which temperatures are selected independently of the temperature gradient during the respective preceding and/or subsequent process step.

2. The method according to claim 1,
**characterized in that**
water, solvents, monomers or similar fractions are eliminated from the molded mass in gaseous form.

3. The method according to claim 1 or 2,
**characterized in that**
the fractions which have been dissolved out of the molded mass by means of degasification are discharged from the plasticizing cylinder (3) in the purification zone (RB) before said molded mass is conveyed to the transport region (TB).

4. The method according to any one of claims 1 to 3,
**characterized in that**
the pressure in the purification zone (RB) of the plasticizing screw is lowered to such an extent that no further paste-like components of the molded mass are discharged from the plasticizing cylinder (3) with the gases.

5. A plasticizing screw for injection molding comprising a helix (2) disposed on a wave-shaped screw core (1) arranged in a plasticizing cylinder (3), wherein the screw core (1) has a plurality of regions along the entire length of the plasticizing screw, each comprising a plurality of working zones (Ai), namely an inlet and compression region (KB) for drawing in plastic particles from a filling hopper (6) which are produced by reducing the size of painted components and contain volatile paint or color remnants and for their technical processing into a homogeneous molded mass, as well as a transport region (TB) for conveying the homogeneous molded mass which can be injection molded into an outlet opening (8) leading into the injection molding machine, wherein an outlet (7) is provided in a purification zone (RB) on the plasticizing cylinder (3) between the inlet and compression region (KB) and the transport region (TB) through which the volatile paint or color remnants can be separated out from the molded mass as gas, and wherein a plurality or all of the working zones (Ai) are each allocated a separate heater which is independently controllable from those for the other working zones (Ai).

6. The plasticizing screw according to claim 5,
**characterized in that**
the outlet (7) connects the interior of the plasticizing cylinder (3) with a space (U) of lower pressure, for example the ambient atmosphere.

7. The plasticizing screw according to claim 5 or 6,
**characterized in that**
the diameter (d) of the screw core (1) is reduced in the purification zone (RB) and an annular space is formed, the volume of which preferably exceeds that of the volume space (5) previously available to the molded mass.

8. The plasticizing screw according to any one of claims 5 to 7,
**characterized in that**
the diameter (d) of the screw core (1) is increased again and the volume space available to the molded mass is minimized again within the transport region (TB).

9. The plasticizing screw according to any one of claims 5 to 8,
**characterized in that**
the diameter (d) of the screw core (1) is reduced and an annular space is formed within the inlet and compression region (KB), just prior the purification zone (RB), said space volume exceeding that of the space previously available to the molded mass.

10. The plasticizing screw according to any one of claims 5 to 9,
**characterized in that**
same ends in a working zone (Ai) shaped as a pointed tip (9) prior the outlet opening (8) in the direction of travel, wherein the helix (2) continues into said tip (9) as far as possible.

11. The method according to any one of claims 1 to 4,
**characterized in that**
a component is produced from the molded mass for use as a resource when securing the position of automotive body parts during painting and/or immersion coating.

12. The method according to claim 11,
**characterized in that**
subsequent the coating, the component is comminuted again into plastic particles from which components are thereafter re-produced for use as resources when securing the position of automotive body parts during painting and/or immersion coating.

13. The method according to claim 12,
**characterized in that**
unprocessed plastic particles are admixed to the plastic particles.

## Revendications

1. Procédé de transformation de particules de matière synthétique fabriquées par broyage de pièces laquées et qui contiennent des restes de peinture ou de laque volatiles en une matière à mouler pouvant être injectée ainsi que d'acheminement dans une machine de moulage par injection, avec une vis sans fin de plastification comportant une spirale de vis sans fin (2) se trouvant à un noyau de vis sans fin (1) ondulé, disposée dans un cylindre de plastification (3), la vis sans fin de plastification étant constituée dans sa direction longitudinale de multiples zones de travail se succédant (Ai ; i = 1... 12) et présentant au moins une zone d'entrée et de compression (KB) pour l'introduction des particules de matière synthétique d'une trémie de remplissage (6) et pour leur transformation technologique en une matière à mouler homogène, ainsi qu'une zone de transport (TB) pour l'acheminement de la matière à mouler homogène pouvant être injectée dans une ouverture de sortie (8) débouchant dans la machine de moulage par injection, où, entre la zone d'entrée et de compression (KB) et la zone de transport (TB) est prévue une zone de nettoyage (RB) dans laquelle la matière à mouler déjà au moins partiellement homogénéisée est nettoyée par dégazage et les restes de peinture ou de laque volatiles sont alors séparés en tant que gaz de la matière à mouler, à chaque étape de procédé détaillée se succédant, s'étant déroulée dans les zones de travail (Ai), étant chaque fois affectée une évolution de température caractéristique ou une température précise qui sont choisies indépendamment des évolutions de température pendant l'étape de procédé précédente et/ou suivante correspondante.

2. Procédé selon la revendication 1,
**caractérisé en ce que**
de l'eau, un solvant et des monomères ou similaires sont séparés sous forme gazeuse de la matière à mouler.

3. Procédé selon la revendication 1 ou 2,
**caractérisé en ce que**,
dans la zone de nettoyage (RB), les composantes libérées par dégazage de la matière à mouler sont évacuées du cylindre de plastification (3) avant que la matière à mouler soit acheminée dans la zone de transport (TB).

4. Procédé selon l'une quelconque des revendications 1 à 3,
**caractérisé en ce que**
la pression dans la zone de nettoyage (RB) de la vis sans fin de plastification est abaissée jusqu'à ce que d'autres composantes pâteuses de la matière à mouler ne soient plus évacuées du cylindre de plastification (3) avec les gaz.

5. Vis sans fin de plastification pour le moulage par injection avec une spirale de vis sans fin (2) se trouvant à un noyau de vis sans fin (1) ondulé, disposée dans un cylindre de plastification (3), le noyau de vis sans fin (1) présentant sur la longueur totale de la vis sans fin de plastification plusieurs zones comportant chacune plusieurs zones de travail (Ai), en l'occurrence une zone d'entrée et de compression (KB) pour l'introduction d'une trémie de remplissage (6) de particules de matière synthétique fabriquée par broyage de pièces laquées et qui contiennent des restes de peinture ou de laque volatiles et pour leur transformation technologique en une matière à mouler homogène, et une zone de transport (TB) pour l'acheminement de la matière à mouler homogène pouvant être injectée dans une ouverture de sortie (8) débouchant dans la machine de moulage par injection, où, dans une zone de nettoyage (RB) entre la zone d'entrée et de compression (KB) et la zone de transport (TB), une évacuation (7) est prévue au cylindre de plastification (3) par laquelle les restes de peinture ou de laque volatiles peuvent être séparés en tant que gaz de la matière à mouler et où, à de nombreuses ou toutes les zones de travail (Ai), est chaque fois affecté un chauffage spécial commandable indépendamment des autres zones de travail (Ai).

6. Vis sans fin de plastification selon la revendication 5,
**caractérisée en ce que**
l'évacuation (7) relie l'intérieur du cylindre de plastification (3) à un espace (U) de plus faible pression, par exemple à l'atmosphère.

7. Vis sans fin de plastification selon la revendication 5 ou 6,
**caractérisée en ce que**
le diamètre (d) du noyau de vis sans fin (1) diminue dans la zone de nettoyage (RB) et qu'un espace annulaire est formé dont le volume dépasse le volume d'espace (5) précédent disponible pour la matière à mouler.

8. Vis sans fin de plastification selon l'une quelconque des revendications 5 à 7,
**caractérisée en ce que**,
dans la zone de transport (TB), le diamètre (d) du noyau de vis sans fin (1) est de nouveau augmenté et que l'espace disponible pour la matière à mouler est de nouveau diminué.

9. Vis sans fin de plastification selon l'une quelconque des revendications 5 à 8,
**caractérisée en ce que**,
dans la zone d'entrée et de compression (KB), juste avant la zone de nettoyage (RB), le diamètre (d) du noyau de vis sans fin (1) est diminué et un espace annulaire formé, dont le volume dépasse le volume précédant disponible pour la matière à mouler.

10. Vis sans fin de plastification selon l'une quelconque des revendications 5 à 9,
**caractérisée en ce que**
elle se termine dans la direction de l'acheminement avant la sortie d'évacuation (8) par une zone de travail (Ai) en forme de pointe d'extrémité (9), la spirale de vis sans fin (2) étant introduite autant que faire se peut dans la pointe (9).

11. Procédé selon l'une quelconque des revendications 1 à 4,
**caractérisé en ce que**
une pièce est fabriquée à partir de la matière à mouler, pour utilisation en tant que moyen de production lors de l'immobilisation en position de pièces de carrosserie pendant le laquage et/ou le revêtement par immersion.

12. Procédé selon la revendication 11,
**caractérisé en ce que**
la pièce, après le revêtement, est de nouveau broyée en particules de matière synthétique dont seront, par la suite, de nouveau fabriquées des pièces à utiliser en tant que moyen de production lors de l'immobilisation en position de pièces de carrosserie pendant le laquage et/ou le revêtement par immersion.

13. Procédé selon la revendication 12,
**caractérisé en ce que**
des particules de matière synthétique encore non traitées sont mélangées aux particules de matière synthétique.
